# EUROPEAN PATENT SPECIFICATION

(11) **EP 3 688 904 B1**
(45) Date of publication and mention of the grant of the patent: **18.10.2023**
(21) Application number: 18785411.2
(22) Date of filing: 28.09.2018
(51) Int. Cl.: H04L 1/1822, H04L 1/1607, H04L 1/1825

(54) **EXTENDED (SUPER) HYBRID AUTOMATIC REPEAT REQUEST ACKNOWLEDGMENT FEEDBACK FORMAT FOR URLLC**
ERWEITERTES (SUPER-)HYBRIDES AUTOMATISCHES WIEDERHOLUNGSANFRAGERÜCKKOPPLUNGSFORMAT FÜR URLLC
FORMAT DE RÉTROACTION ÉTENDUE (SUPER) D'ACCUSÉ DE RÉCEPTION DE REQUÊTE AUTOMATIQUE DE RÉPÉTITION HYBRIDE POUR DES COMMUNICATIONS URLLC

(30) Priority: 29.09.2017 US 201762565657 P
(43) Date of publication of application: 05.08.2020
(73) Proprietor: Nokia Technologies Oy, 02610 Espoo (FI)
(72) Inventor: HUGL, Klaus, 1070 Wien (AT); LI, Zexian, 02340 Espoo (FI)
(74) Representative: Laine IP Oy
(86) International application number: PCT/FI2018/050697
(87) International publication number: WO 2019/063885

(56) References cited:
- EP-A1- 2 663 007
- WO-A1-2016/060599
- QUALCOMM INCORPORATED: "Ultra reliable HARQ design with async CSI feedback", 3GPP DRAFT; R1-1713455 ULTRA RELIABLE HARQ DESIGN WITH ASYNC CSI FEEDBACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. RAN WG1, no. Prague, Czech; 20170821 - 20170825 20 August 2017 (2017-08-20), XP051316257, Retrieved from the Internet: URL:http://www.3gpp.org/ftp/Meetings_3GPP_ SYNC/RAN1/Docs/ [retrieved on 2017-08-20]

## Description

### BACKGROUND:

### Field:

Various communication systems may benefit from the appropriate selection of feedback mechanisms. For example, ultra-reliable low latency communications (URLLC) systems may benefit from properly formatted extended/super hybrid automatic repeat request acknowledgment feedback.

### Description of the Related Art:

The third generation partnership project (3GPP) contribution, R1-1713455 "Ultra reliable HARQ design with async CSI feedback," proposed a ultra-reliable low latency communications (URLLC) type of downlink (DL) - shared channel (SCH) (DL-SCH) feedback to signal, in addition to the normal hybrid automatic repeat request (HARQ) - acknowledgment (ACK) (HARQ-ACK) information, some additional information by the terminal to the network in case of unsuccessful decoding. ACK can refer to a correct decoding, while NACK can refer to incorrect decoding.

This additional information, as laid out in R1-1713455, would give the network information on how much additional redundancy information would still need to be sent to the terminal by the network of a DL-SCH URLLC transport block to enable successful decoding. R1-1713455 does not reveal how such extended or super NACK information would be signaled.

In traditional HARQ processes, retransmission could take the same amount of resources as the first transmission and can take multiple HARQ retransmissions to get final successful reception of the packet. However, in URLLC, so many retransmissions to get the packet may result in failure to meet a tight, for example <1ms, latency constraint. On the other hand, high reliability is also required for URLLC, so there may be a need to have some sort of HARQ process anyway.

WO 2016/060599 A1 presents an example method, in a wireless device, which comprises receiving from a wireless communication network, in a first transmission-time interval, a request for ARQ feedback, the request indicating one or more ARQ processes. The example method further comprises transmitting to the wireless communication network, in a second transmission-time interval, ARQ feedback information for each of the one or more indicated ARQ processes.

EP 2 663 007 A1 concerns a method for transmission of positive acknowledgement messages and negative acknowledgement messages from a first network device to a second network device for data packets received at the first network device, wherein each of said negative acknowledgement messages indicates one quality level of at least two different quality levels dependent on a quality of a data packet received at the first network device, and a differentiation between positive acknowledgement messages and negative acknowledgement messages has a stronger error protection than a differentiation between negative acknowledgement messages indicating different quality levels,

QUALCOMM INCORPORATED: "Ultra reliable HARO design with async CSI feedback", 3GPP DRAFT; R1-1713455 ULTRA RELIABLE HARQ DESIGN WITH ASYNC CSI FEEDBACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE, vol. RAN WG1, no. Prague, Czech; 20170821 - 20170825 20 August 2017.

### SUMMARY

The invention is set out in the appended set of claims.

### BRIEF DESCRIPTION OF THE DRAWINGS:

For proper understanding of the invention, reference should be made to the accompanying drawings, wherein:
Figure 1 illustrates first and second sets of hybrid automatic repeat request acknowledgment information, according to certain embodiments.
Figure 2 illustrates a first example of operation according to certain embodiments.
Figure 3 illustrates a second example of operation according to certain embodiments.
Figure 4 illustrates a method according to certain embodiments.
Figure 5 illustrates a system according to certain embodiments.

### DETAILED DESCRIPTION:

Certain embodiments relate to various signaling options for increasing the downlink shared channel (DL-SCH) feedback information for highly-reliable or ultra-reliable and low latency communications (HRLLC or URLLC). More particularly, certain embodiments relate to an optimized way of using extended HARQ-ACK information, taking into account URLLC specifics and HARQ-ACK payload size.

Certain embodiments can improve the HARQ process for URLLC, which may require both high reliability and low latency. One issue is that any additional extended information may only be needed by the network in the case of unsuccessful decoding of the DL-SCH by the UE. Therefore, the number of information bits to be fed back by the UE may be dependent on the decoding outcome of the URLLC DL-SCH data packets. This may make it challenging to determine the HARQ-ACK codebook size at the evolved Node B (eNB) or the next generation Node B (gNB) side during the decoding process. Certain embodiments may be applicable to any uplink or downlink data channel associated with a feedback process such as a HARQ process, and consequently certain embodiments are not limited to being applied to a DL-SCH or UL-SCH. That is to say, a person skilled in the art will understand how to apply the invention in different wireless systems that may have various names for different channels. Similarly, the present invention is not limited to URLLC either, it may be exploited in other systems as well.

One option could be to provide a sufficient fixed number of bits in the HARQ-ACK codebook whose size is able to map the extended HARQ-ACK information for all the URLLC DL-SCH HARQ-ACK processes. As an example, if there are eight signaling states and therefore three bits needed for the extended HARQ-ACK information in case of unsuccessful decoding indicated as NACK and assuming as an example four URLLC HARQ processes, the HARQ-ACK codebook could contain 4*3 = 12 bits for the extended HARQ-ACK information. This 12 bit-size may provide a rather large overhead for the extended HARQ-ACK feedback. In addition, with the same amount of feedback resources, the more HARQ-ACK information that is to be fed back by the terminal to the network node, the lower the reliability of the HARQ-ACK information will be, as less redundancy can be included in the HARQ-ACK transmission and thus a lower coding rate of the HARQ-ACK information may be used.

Moreover, for URLLC services there is an assumption to operate with a rather low block error rate (BLER) for URLLC transmission compared to mobile broadband (MBB) traffic to keep the latency low and reduce the need on HARQ retransmissions. Therefore, the need for the additional signaling information of the extended HARQ-ACK for all the processes would not be needed most of the time and all or at least part of the signaling bits in the HARQ-ACK codebook for the extended HARQ information would remain unused most of the time. Meaning, that most of the time all or at least part of the bits (or signaling states) for the extended HARQ-ACK information would be transmitted with no use at all which is clearly inefficient.

According to the invention, the overall HARQ-ACK information, covering both ACK and NACK cases despite being called HARQ-ACK information, from the terminal to the eNB or gNB can be split in two parts. A first set of HARQ-ACK information can include HARQ-ACK (ACK and/or NACK) information for all DL-SCH HARQ processes. A second set of HARQ-ACK information can include extended HARQ-ACK information for a limited number of URLLC DL-SCH HARQ processes with NACK, namely processes in which the received packet was not correctly decoded. This limited number of processes can be a subset of all URLLC DL-SCH HARQ-ACK processes.

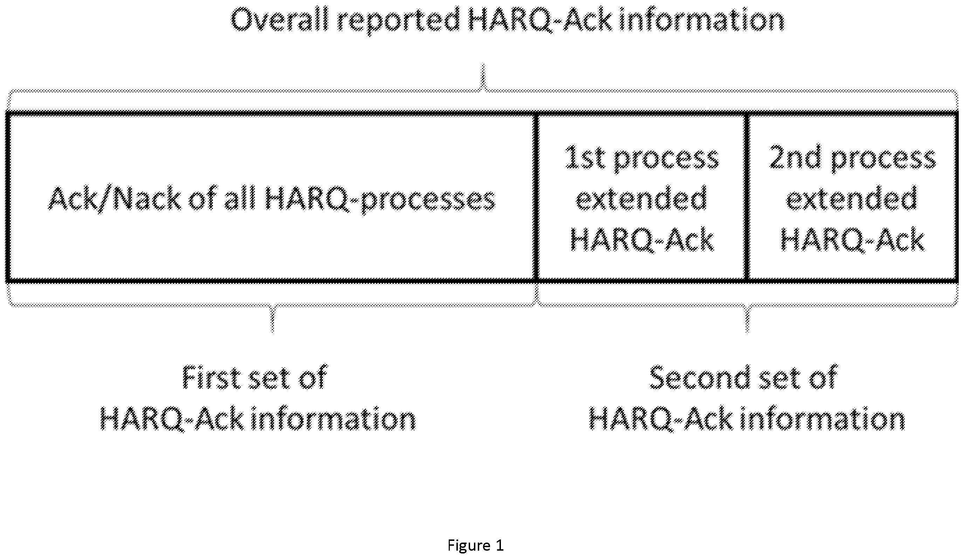

The size of the second set, in number of URLLC HARQ-ACK processes, can be either fixed in the specification or configured by the network via signaling. Such signaling may include for example higher layer signaling or alternatively, a combination of higher layer signaling and physical layer control signaling. Higher layer signaling may hereby refer to a radio resource control (RRC) configuration message, where the URLLC operation including at least the extended HARQ-ACK information reporting and the size of the second set is configured. Alternatively, the overall URLLC operation itself may be configured by higher layer signaling using a RRC configuration message, but a physical layer message such as a type of activation/deactivation downlink control information may be used to activate (and possibly deactivate) the extended HARQ-ACK information reporting including an indication on the size of the second set. The physical layer message can also be used to dynamically update certain settings (for example joint or separated coding for the first and the second set of HARQ-ACK information) which can be originally configured via higher layer signaling. Moreover, the content of the first set of HARQ-ACK information can define/identify for which URLLC HARQ-ACK process(es) the extended HARQ-ACK information is included in the second set of HARQ-ACK information, as illustrated in the example Figure 1.

Thus, the HARQ process can be extended so that a first set of HARQ resources comprises the regular information, namely ACK/NACK for all processes, and a second set of HARQ resources comprises additional information related to NACK feedback only for the process with NACK.

Figure 1 illustrates first and second sets of hybrid automatic repeat request acknowledgment information, according to certain embodiments. Thus, Figure 1 provides an illustration of first and second set of HARQ-ACK information for extended/super HARQ-ACK reporting for DL URLLC operation.

The invention relates to the size of the second set, which is limited to achieve a tradeoff between resource consumption and reliable transmission of NACK information.

From the user equipment (UE) point of view, the UE needs to to determine the maximum size of the second set of HARQ resources. This maximum size may be received from the network, for example from an access node such as a base station (BS), access point (AP), evolved Node B (eNB), or next generation Node B (gNB), or specified in the standards. The UE may also determine the number of processes with NACK. If the number of NACKs is lower than the maximum size of the second set of HARQ resources, the UE can simply transmit all the NACK related extended information in the second set. Such NACK related extended information may include the size of the resources (or the number of resource blocks), repetitions or similar to perform the needed link adaptation for retransmission. However, if the number is larger than the configured maximum size of the second set the UE has to decide which NACK related extended information will be transmitted in the second set, because it cannot transmit all of them. This decision may be based on a couple of different rules.

As explained above, the first set of HARQ-ACK information is the usual HARQ-ACK information, which can contain just the ACK/NACK information to be provided by the UE to the (e)(g)NB, such as the high speed packet access (HSPA), LTE or Multefire HARQ-ACK information. This HARQ-ACK information may contain the HARQ-ACK 'ACK/NACK' information of data packets of one or several URLLC HARQ-ACK processes of a single or several DL carriers.

The second set, as noted above, contains the extended HARQ-ACK information of one or several URLLC HARQ-ACK processes, in case they are not correctly received and NACK is to be reported for them. The number of URLLC HARQ-ACK processes where extended HARQ-ACK can be reported, Num extHARQ, can be smaller than the overall number of URLLC HARQ-ACK processes, and only a subset of the overall number of URLLC HARQ-ACK processes. The number to be reported, Num extHARQ, may be either defined in the specification or configured by the network to the terminal by signaling. Such signaling may include for example higher layer signaling or alternatively, a combination of higher layer signaling and physical layer control signaling. Figure 1 shows an example of the overall structure of the HARQ-ACK payload for both sets for the case of Num extHARQ = 2.

The number of DL URLLC HARQ processes may be rather large due to the possibility of having several data packets for transmission and considering the case of higher layer data duplication of a single data packet on several carriers, as discussed in 3GPP for new radio (NR). The number of processes for extended HARQ-ACK reporting may not be too large and the number of processes for reporting may be smaller than the overall number of processes. Thus, there may be a need for a mapping mechanism of the URLLC HARQ process (ID) to the field of the extended HARQ-ACK process. The procedure here would be, that firstly only those URLLC HARQ-ACK processes for which 'NACK' (i.e. not correctly received) is reported are candidate processes for extended HARQ-ACK reporting. Moreover, in case more than Num_extHARQ DL URLLC HARQ processes report 'NACK' only a further subset of them can report the extended HARQ-ACK information.

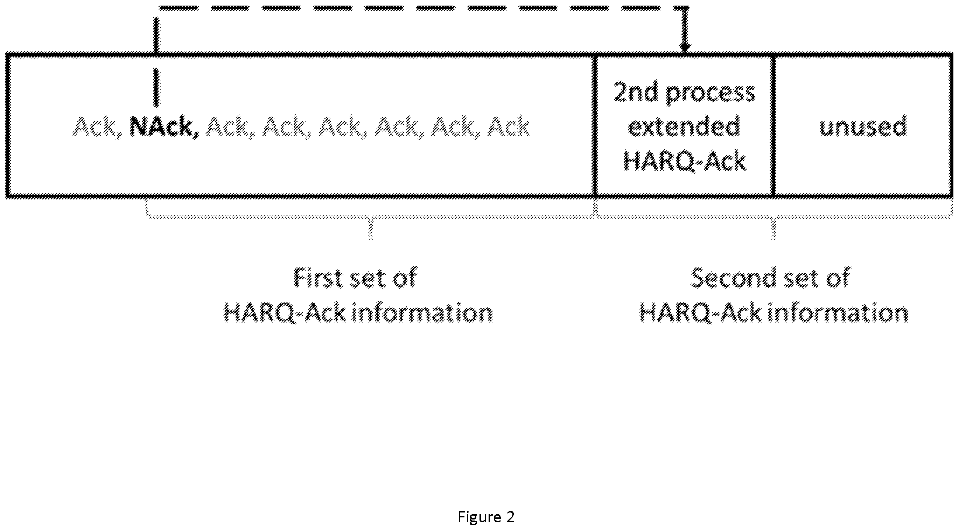

Figure 2 illustrates a first example of operation of certain embodiments. In the example operation shown in Figure 2, there are eight downlink (DL) URLLC HARQ processes active (of a single and/or several component carriers) and for which HARQ-ACK is to be reported. There may be, for example, eight received downlink packets, each associated with one HARQ process. In this example, Num extHARQ = 2, which may be set by the specification or by the network, as described above. In this example, all except the second URLLC HARQ-ACK process report ACK and therefore the extended HARQ-ACK information of the second process is mapped to the first extended HARQ-ACK field of the HARQ-ACK information.

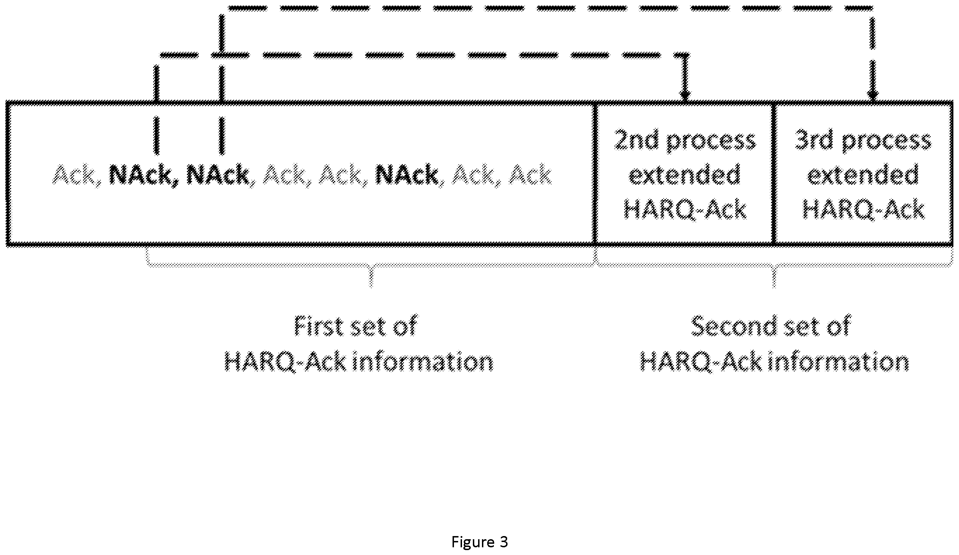

Figure 3 illustrates a second example of operation of certain embodiments. In the example of Figure 3, out of the eight processes only the second, third and sixth URLLC HARQ processes report NACK, whereas the others all report ACK. Only those with NACK, namely the 2nd, 3rd and 6th processes, would benefit from extended HARQ-ACK reporting. As only two extended HARQ-ACK can be reported, Num_extHARQ = 2, but three processes report NACK, only two can report extended HARQ-ACK. In this case, only the first two (the second and third) of the subset of URLLC processes with NACK (second, third, and sixth) are to be reported. For the third non-successful HARQ-ACK process, the sixth HARQ-process, no extended HARQ-ACK information is transmitted in this example.

As can be seen from the two examples above, as long as there are not more than Num extHARQ DL URLLC HARQ processes for which the DL data packets are unsuccessfully received, the extended HARQ-ACK information for all unsuccessful processes can be fed back as given by the example of Figure 2. Otherwise, as shown in Figure 3, only a subset of unsuccessful processes can be fed back with the extended HARQ-ACK information.

For the case of Figure 3, the selection of the Num_extHARQ unsuccessful processes for reporting can be given by certain rules, which can be specified in the standard or configured by higher layer signaling or a combination of physical layer signaling and higher layer signaling. The different rules for the selection might include either of the following two alternatives.

According to a first alternative, labelled alternative 1 for ease of reference only and not by way of limitation or priority, the rule may be that the extended information is provided in the order of the reported HARQ-ACK in the first set of HARQ-ACK information, as shown in the example of Figure 3.

According to a second alternative, labelled alternative 2 for ease of reference only and not by way of limitation or priority, the rule may be that the extended information is provided in the order of the URLLC HARQ-ACK reported over several carriers by cycling over the DL component carrier sets (i.e. using a DL component carrier first, NACK of a single CC second mapping). With such an alternative, potential extended HARQ-ACK would be reported for URLLC processes of as many DL component carriers as possible. This may be useful, as the extended HARQ-ACK information of one process on a carrier may also be used by the network to perform link adaptation of the other DL URLLC HARQ processes on the same carrier. For the case of three DL carriers with each having two unsuccessful URLLC HARQ transmissions, the order of the selection could be as follows: [NACK _1_{_}1, NACK_1_2, NACK_1_3, NACK_2_1, NACK_2_2, NACK 2 3], where NACK x_y denotes the x-th negative acknowledgement of the URLLC DL HARQ processes of the y-th component carrier. For single carrier URLLC operation, Alternative 1 and Alternative 2 would lead to the same selection.

In general, cycling among carriers can involve any form of distribution of prioritization amongst the negative acknowledgments for different carriers. For example, a first negative acknowledgment can be for a first carrier, then a second negative acknowledgement for a second carrier, and so on, looping back to the first carrier if there is sufficient room for a second negative acknowledgment for the first carrier. Thus, even if the first carrier has many negative acknowledgments, the other carriers may receive handling of at least some of their negative acknowledgments.

The first set of HARQ-ACK information and the second set of HARQ-ACK information may be jointly or separately coded for the overall extended HARQ-ACK reporting. Separate coding may be considered, as the reliability of the first set of HARQ-ACK information may be more important than the second set of HARQ-ACK information. Whereas errors in the first set of HARQ-ACK information may trigger unnecessary higher layer re-transmissions and/or waste resources for transmission, the second set of information may only lead to imperfect link adaptation of possible URLLC re-transmissions.

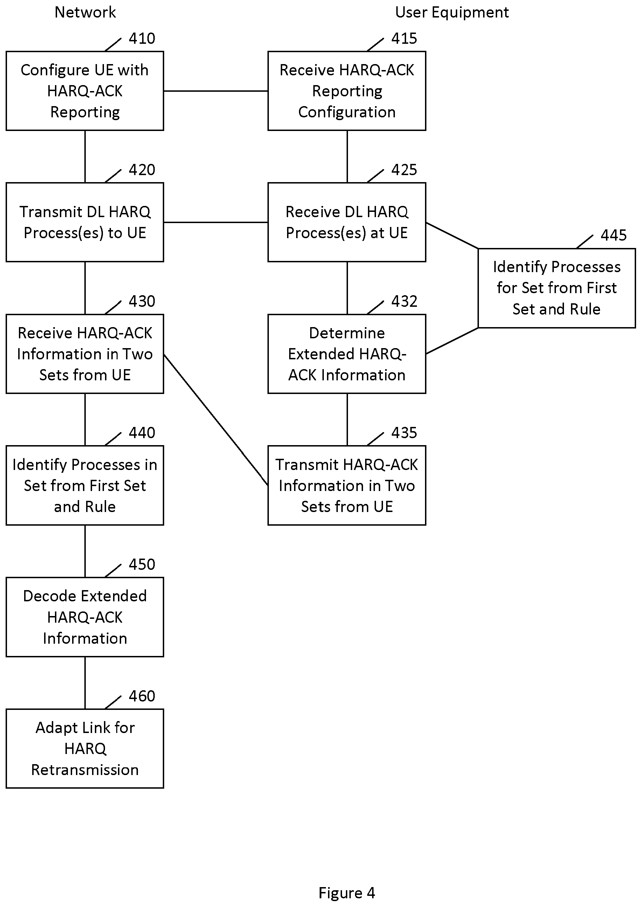

Figure 4 illustrates a method according to certain embodiments. As shown in Figure 4, certain steps of a method may be performed at a network side and certain steps may be performed at a user equipment side.

The method includes, at 410, configuring the UE or terminal with extended HARQ-ACK reporting, including a first and second set of HARQ information. The configuration includes the number of HARQ processes for extended HARQ-ACK reporting, Num_extHARQ.

The configuration may also or alternatively include the configuration of the rule for selecting the subset of unsuccessful URLLC HARQ-ACK processes for extended HARQ-ACK reporting. Alternatively, the rule may be given by the standard specifications directly. The configuration information to the UE may be carried through higher layer signaling or through a combination of higher layer signaling and physical layer signaling.

The rules may include, for example, reporting in the order of the reported HARQ-ACK in the first set of HARQ-ACK information, as shown in the example of Figure 3. In another example, the rules may include reporting in the order of the URLLC HARQ-ACK reported over several carriers by cycling over the DL component carriers. With such alternative, potential extended HARQ-ACK would be reported for URLLC processes of as many DL component carriers as possible. Other alternative rules are also permitted.

The method includes, at 420, transmitting the DL-SCH data related to one or more DL URLLC HARQ processes to the user equipment or terminal. The method further includes, at 430, receiving the HARQ-ACK information from the UE containing a first and second set of HARQ-ACK information according to configured extended HARQ-ACK reporting of step 410. The second set of hybrid automatic repeat request acknowledgment information provides additional information regarding at least a subset of negatively acknowledged hybrid automatic repeat request processes identified in the first set of hybrid automatic repeat request acknowledgment information. Thus, the HARQ processes with 'NACK' in the first set of HARQ-ACK information can give the set of potential HARQ-ACK processes for extended HARQ-ACK reporting.

Based on the rule identified above and the subset of HARQ processes, the network can, at 440, identify the URLLC HARQ processes for which extended HARQ-ACK is reported. Then, the network can, at 450, decode the extended HARQ-ACK information of the identified URLLC HARQ processes of the identified URLLC HARQ processes in 440. The network can, at 460, use the extended HARQ-ACK information for link adaptation for example of the HARQ-ACK retransmission of at least the identified URLLC HARQ processes in 440.

The above method steps may be performed at a network side, such as at an eNB or next generation Node B (gNB). The following corresponding method steps may be performed at a user equipment or terminal side.

For example, at 415, the user equipment can receive a configuration for extended HARQ-ACK reporting from the network. This may be the same configuration as described above at 410.

At 425, the user equipment or terminal receives data related to one or more DL URLLC HARQ processes from the eNB/gNB/network node. This may be the same data transmitted at 420.

Based on the received data, at 432, the UE determines the HARQ-ACK information containing a first and second set of HARQ-ACK information, including the extended information, and transmits, at 435, the overall HARQ-ACK information to the network.

This can be the same HARQ-ACK information received above at 430. Thus, the HARQ processes with 'NACK' in the first set of HARQ-ACK information can define/identify the set of potential HARQ-ACK processes for extended HARQ-ACK reporting.

In the determination of extended HARQ-ACK of 432, based on the same rules described above, and the negatively acknowledged subset of HARQ processes, the terminal can, at 445, identify the URLLC HARQ processes for which extended HARQ-ACK is to be reported. The extended HARQ-ACK information of the identified URLLC HARQ processes can be determined and mapped to the corresponding extended HARQ-ACK fields of the second set of HARQ-ACK information. The first and second set of HARQ-ACK information may be jointly or separately coded.

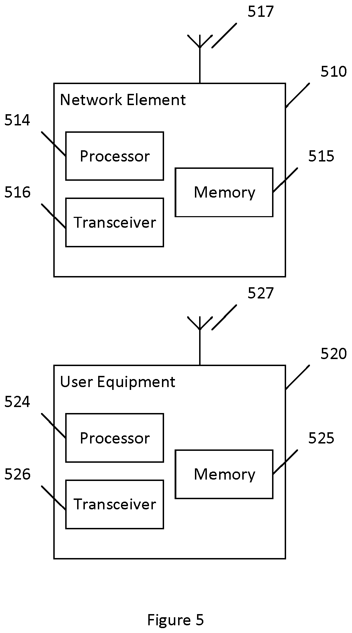

Figure 5 illustrates a system according to certain embodiments of the invention. It should be understood that each block of the flowchart of Figure 4 may be implemented by various means or their combinations, such as hardware, software, firmware, one or more processors and/or circuitry. In one embodiment, a system may include several devices, such as, for example, network element 510 and user equipment (UE) or user device 520. The system may include more than one UE 520 and more than one network element 510, although only one of each is shown for the purposes of illustration. A network element can be an access point, a base station, an eNode B (eNB), or any other network element, such as a next generation Node B (gNB).

Each of these devices may include at least one processor or control unit or module, respectively indicated as 514 and 524. At least one memory may be provided in each device, and indicated as 515 and 525, respectively. The memory may include computer program instructions or computer code contained therein, for example for carrying out the embodiments described above. One or more transceiver 516 and 526 may be provided, and each device may also include an antenna, respectively illustrated as 517 and 527. Although only one antenna each is shown, many antennas and multiple antenna elements may be provided to each of the devices. Other configurations of these devices, for example, may be provided. For example, network element 510 and UE 520 may be additionally configured for wired communication, in addition to wireless communication, and in such a case antennas 517 and 527 may illustrate any form of communication hardware, without being limited to merely an antenna.

Transceivers 516 and 526 may each, independently, be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example. It should also be appreciated that according to the "liquid" or flexible radio concept, the operations and functionalities may be performed in different entities, such as nodes, hosts or servers, in a flexible manner. In other words, division of labor may vary case by case. One possible use is to make a network element to deliver local content. One or more functionalities may also be implemented as a virtual application that is provided as software that can run on a server.

A user device or user equipment 520 may be a mobile station (MS) such as a mobile phone or smart phone or multimedia device, a computer, such as a tablet, provided with wireless communication capabilities, personal data or digital assistant (PDA) provided with wireless communication capabilities, vehicle, portable media player, digital camera, pocket video camera, navigation unit provided with wireless communication capabilities or any combinations thereof. The user device or user equipment 520 may be a sensor or smart meter, or other device that may usually be configured for a single location.

In an exemplifying embodiment, an apparatus, such as a node or user device, may include means for carrying out embodiments described above in relation to Figures 1 through 4.

Processors 514 and 524 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors. Additionally, the processors may be implemented as a pool of processors in a local configuration, in a cloud configuration, or in a combination thereof. The term circuitry may refer to one or more electric or electronic circuits. The term processor may refer to circuitry, such as logic circuitry, that responds to and processes instructions that drive a computer.

For firmware or software, the implementation may include modules or units of at least one chip set (e.g., procedures, functions, and so on). Memories 515 and 525 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and which may be processed by the processors can be any suitable form of computer program code, for example, a compiled or interpreted computer program written in any suitable programming language. The memory or data storage entity is typically internal but may also be external or a combination thereof, such as in the case when additional memory capacity is obtained from a service provider. The memory may be fixed or removable.

The memory and the computer program instructions may be configured, with the processor for the particular device, to cause a hardware apparatus such as network element 510 and/or UE 520, to perform any of the processes described above (see, for example, Figure 4). Therefore, in certain embodiments, a non-transitory computer-readable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, etc., or a low-level programming language, such as a machine language, or assembler. Alternatively, certain embodiments of the invention may be performed entirely in hardware.

Furthermore, although Figure 5 illustrates a system including a network element 510 and a UE 520, embodiments of the invention may be applicable to other configurations, and configurations involving additional elements, as illustrated and discussed herein. For example, multiple user equipment devices and multiple network elements may be present, or other nodes providing similar functionality, such as nodes that combine the functionality of a user equipment and an access point, such as a relay node.

Certain embodiments may have various benefits and/or advantages. For example, certain embodiments may limit the overhead of the HARQ-ACK reporting by providing a configurable fixed overhead HARQ-ACK reporting scheme of only providing ability to report the additional HARQ-ACK information for a potentially configurable limited number of DL URLLC HARQ processes. For the example of eight URLLC processes with Num_extHARQ = 2, only one quarter of the additional payload size may be required, compared to the case of reserving bits for extended HARQ-ACK of all processes, which would be the worst case scenario.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention as defined by the appended claims.

### List of Abbreviations

- ACK: Acknowledgement
- DL: Downlink
- HARQ: Hybrid automatic repeat request
- HRLLC: High reliable low latency communications
- NACK: Negative Acknowledgement
- RRC: Radio Resource Control
- TB: Transport block
- UE: User equipment
- UL: Uplink
- URLLC: Ultra reliable low latency communications

## Claims

1. An apparatus comprising:
means for transmitting downlink data related to one or more downlink hybrid automatic repeat request processes to a user equipment (520),
means for receiving hybrid automatic repeat request acknowledgment information from the user equipment (520) containing a first set of hybrid automatic repeat request acknowledge information and a second set of hybrid automatic repeat request acknowledgment information, wherein the first set of hybrid automatic repeat request acknowledge information includes acknowledgement and/or negative acknowledgement information, and wherein the second set of hybrid automatic repeat request acknowledgement information provides additional information regarding at least a subset of negatively acknowledged hybrid automatic repeat request processes identified in the first set of hybrid automatic repeat request acknowledgment information without providing additional information regarding positively acknowledged hybrid automatic repeat request processes, and
means for configuring the user equipment (520), wherein the configuring includes a maximum number of hybrid automatic repeat request processes for the second set of hybrid automatic repeat request acknowledgment information.

2. The apparatus according to claim 1 further comprising means for configuring the user equipment (520), wherein the configuring includes extended hybrid automatic repeat request acknowledgment.

3. The apparatus according to any of claims 1-2, further comprising means for configuring the user equipment (520), wherein the configuring includes a rule for selection of a subset of unsuccessful hybrid automatic repeat request processes to include for reporting within the maximum number of hybrid automatic repeat request processes to receive extended reporting.

4. The apparatus according to claim3, wherein the rule for selecting the subset comprises an order in which processes were negatively acknowledged and/or by cycling over component carriers.

5. The apparatus according to claim 3 or 4, further comprising means for identifying the subset based on the first set of hybrid automatic repeat request acknowledgment information and the rule for selection of the subset.

6. The apparatus according to any of claims 1-5, further comprising means for adapting a link for hybrid automatic repeat request retransmission based on the first set of hybrid automatic repeat request acknowledgment information and a second set of hybrid automatic repeat request acknowledgment information.

7. An apparatus comprising:
means for receiving downlink data related to one or more downlink hybrid automatic repeat request processes at a user equipment (520),
means for transmitting hybrid automatic repeat request acknowledgment information from the user equipment (520) containing a first set of hybrid automatic repeat request acknowledgment information and a second set of hybrid automatic repeat request acknowledgment information, wherein the first set of hybrid automatic repeat request acknowledge information includes acknowledgement and/or negative acknowledgement information, and wherein the second set of hybrid automatic repeat request acknowledgment information provides additional information regarding at least a subset of negatively acknowledged hybrid automatic repeat request processes identified in the first set of hybrid automatic repeat request acknowledgment information without providing additional information regarding positively acknowledged hybrid automatic repeat request processes, and
means for determining a maximum number of hybrid automatic repeat request processes for the second set of hybrid automatic repeat request acknowledgment information.

8. The apparatus according to claim 7, further comprising means for receiving a configuration of the user equipment (520), wherein the configuration includes a rule for selection of a subset of unsuccessful hybrid automatic repeat request processes to include for reporting within the maximum number of hybrid automatic repeat request processes to receive extended reporting.

9. The apparatus according to any of claims 7 or 8, further comprising means for receiving a configuration of the user equipment (520), wherein the configuration is received using higher layer signaling or a combination of higher layer signaling and physical layer signaling.

10. The apparatus according to any of claims 7-9, further comprising means for receiving a configuration of the user equipment including a rule for selecting the subset, wherein the rule comprises an order in which processes were negatively acknowledged and/or by cycling over component carriers.

11. The apparatus according to claim 10, further comprising means for identifying the subset to be reported based on the first set of hybrid automatic repeat request acknowledgment information and the rule for selection of the subset.

12. The apparatus according to any of claims 7 - 11, further comprising means for jointly coding or separately coding the first set of hybrid automatic repeat request acknowledgment information and the second set of hybrid automatic repeat request acknowledgement information.

13. A method comprising:
transmitting downlink data related to one or more downlink hybrid automatic repeat request processes to a user equipment (520),
receiving hybrid automatic repeat request acknowledgment information from the user equipment (520) containing a first set of hybrid automatic repeat request acknowledge information and a second set of hybrid automatic repeat request acknowledgment information, wherein the first set of hybrid automatic repeat request acknowledge information includes acknowledgement and/or negative acknowledgement information, and wherein the second set of hybrid automatic repeat request acknowledgement information provides additional information regarding at least a subset of negatively acknowledged hybrid automatic repeat request processes identified in the first set of hybrid automatic repeat request acknowledgment information without providing additional information regarding positively acknowledged hybrid automatic repeat request processes, and
configuring the user equipment (520), wherein the configuring includes a maximum number of hybrid automatic repeat request processes for the second set of hybrid automatic repeat request acknowledgment information.

14. A method comprising:
receiving downlink data related to one or more downlink hybrid automatic repeat request processes at a user equipment (520),
transmitting hybrid automatic repeat request acknowledgment information from the user equipment (520) containing a first set of hybrid automatic repeat request acknowledgment information and a second set of hybrid automatic repeat request acknowledgment information, wherein the first set of hybrid automatic repeat request acknowledge information includes acknowledgement and/or negative acknowledgement information, and wherein the second set of hybrid automatic repeat request acknowledgment information provides additional information regarding at least a subset of negatively acknowledged hybrid automatic repeat request processes identified in the first set of hybrid automatic repeat request acknowledgment information without providing additional information regarding positively acknowledged hybrid automatic repeat request processes, and
determining a maximum number of hybrid automatic repeat request processes for the second set of hybrid automatic repeat request acknowledgment information.

## Patentansprüche

1. Gerät, umfassend:
Mittel zum Senden von Downlink-Daten bezüglich eines oder mehrerer hybrider automatischer Downlink-Wiederholungsanfrageprozesse an ein Endgerät (520),
Mittel zum Empfangen von Quittierungsinformationen einer hybriden automatischen Wiederholungsanfrage von dem Endgerät (520), die eine erste Menge von Quittierungsinformationen einer hybriden automatischen Wiederholungsanfrage und eine zweite Menge von Quittierungsinformationen einer hybriden automatischen Wiederholungsanfrage umfassen, wobei die erste Menge von Quittierungsinformationen einer hybriden automatischen Wiederholungsanfrage Quittierungs- und/oder negative Quittierungsinformationen umfasst, und wobei die zweite Menge von Quittierungsinformationen einer hybriden automatischen Wiederholungsanfrage zusätzliche Informationen bezüglich mindestens einer Teilmenge von negativ quittierten hybriden automatischen Wiederholungsanfrageprozessen, die in der ersten Menge von Quittierungsinformationen einer hybriden automatischen Wiederholungsanfrage identifiziert sind, bereitstellt, ohne zusätzliche Informationen bezüglich positiv quittierter hybrider automatischer Wiederholungsanfrageprozesse bereitzustellen, und
Mittel zum Konfigurieren des Endgeräts (520), wobei das Konfigurieren eine maximale Anzahl von hybriden automatischen Wiederholungsanfrageprozessen für die zweite Menge von Quittierungsinformationen einer hybriden automatischen Wiederholungsanfrage umfasst.

2. Gerät nach Anspruch 1, ferner umfassend Mittel zum Konfigurieren des Endgeräts (520), wobei das Konfigurieren eine erweiterte Quittierung einer hybriden automatischen Wiederholungsanfrage umfasst.

3. Gerät nach einem der Ansprüche 1 bis 2, ferner umfassend Mittel zum Konfigurieren des Endgeräts (520), wobei das Konfigurieren eine Regel zum Auswählen einer Teilmenge von fehlgeschlagenen hybriden automatischen Wiederholungsanfrageprozessen umfasst, die zum Melden innerhalb der maximalen Anzahl von hybriden automatischen Wiederholungsanfrageprozessen einzubeziehen sind, um eine erweiterte Meldung zu empfangen.

4. Gerät nach Anspruch 3, wobei die Regel zum Auswählen der Teilmenge eine Reihenfolge umfasst, in der Prozesse negativ quittiert wurden, und/oder durch zyklisches Durchlaufen von Komponententrägern erfolgt.

5. Gerät nach Anspruch 3 oder 4, ferner umfassend Mittel zum Identifizieren der Teilmenge basierend auf der ersten Menge von Quittierungsinformationen einer hybriden automatischen Wiederholungsanfrage und der Regel zur Auswahl der Teilmenge.

6. Gerät nach einem der Ansprüche 1 bis 5, ferner umfassend Mittel zum Anpassen einer Verknüpfung für eine Weiterübertragung einer hybriden automatischen Wiederholungsanfrage basierend auf der ersten Menge von Quittierungsinformationen einer hybriden automatischen Wiederholungsanfrage und einer zweiten Menge von Quittierungsinformationen einer hybriden automatischen Wiederholungsanfrage.

7. Gerät, umfassend:
Mittel zum Empfangen von Downlink-Daten bezüglich eines oder mehrerer hybrider automatischer Downlink-Wiederholungsanfrageprozesse an einem Endgerät (520),
Mittel zum Senden von Quittierungsinformationen einer hybriden automatischen Wiederholungsanfrage von dem Endgerät (520), die eine erste Menge von Quittierungsinformationen einer hybriden automatischen Wiederholungsanfrage und eine zweite Menge von Quittierungsinformationen einer hybriden automatischen Wiederholungsanfrage umfassen, wobei die erste Menge von Quittierungsinformationen einer hybriden automatischen Wiederholungsanfrage Quittierungs- und/oder negative Quittierungsinformationen umfasst, und wobei die zweite Menge von Quittierungsinformationen einer hybriden automatischen Wiederholungsanfrage zusätzliche Informationen bezüglich mindestens einer Teilmenge von negativ quittierten hybriden automatischen Wiederholungsanfrageprozessen, die in der ersten Menge von Quittierungsinformationen einer hybriden automatischen Wiederholungsanfrage identifiziert sind, bereitstellt, ohne zusätzliche Informationen bezüglich positiv quittierter hybrider automatischer Wiederholungsanfrageprozesse bereitzustellen, und
Mittel zum Bestimmen einer maximalen Anzahl von hybriden automatischen Wiederholungsanfrageprozessen für die zweite Menge von Quittierungsinformationen einer hybriden automatischen Wiederholungsanfrage.

8. Gerät nach Anspruch 7, ferner umfassend Mittel zum Empfangen einer Konfiguration des Endgeräts (520), wobei die Konfiguration eine Regel zur Auswahl einer Teilmenge von fehlgeschlagenen hybriden automatischen Wiederholungsanfrageprozessen umfasst, die zum Melden innerhalb der maximalen Anzahl von hybriden automatischen Wiederholungsanfrageprozessen einzubeziehen sind, um eine erweiterte Meldung zu empfangen.

9. Gerät nach einem der Ansprüche 7 oder 8, ferner umfassend Mittel zum Empfangen einer Konfiguration des Endgeräts (520), wobei die Konfiguration unter Verwendung einer höherschichtigen Signalgebung oder einer Kombination einer höherschichtigen Signalgebung und einer Signalgebung der Bitübertragungsschicht empfangen wird.

10. Gerät nach einem der Ansprüche 7 bis 9, ferner umfassend Mittel zum Empfangen einer Konfiguration des Endgeräts, die eine Regel zum Auswählen der Teilmenge umfasst, wobei die Regel eine Reihenfolge umfasst, in der Prozesse negativ quittiert wurden, und/oder durch zyklisches Durchlaufen von Komponententrägern erfolgt.

11. Gerät nach Anspruch 10, ferner umfassend Mittel zum Identifizieren der zu meldenden Teilmenge basierend auf der ersten Menge von Quittierungsinformationen einer hybriden automatischen Wiederholungsanfrage und der Regel zur Auswahl der Teilmenge.

12. Gerät nach einem der Ansprüche 7 bis 11, ferner umfassend Mittel zum gemeinsamen Codieren oder zum getrennten Codieren der ersten Menge von Quittierungsinformationen einer hybriden automatischen Wiederholungsanfrage und der zweiten Menge von Quittierungsinformationen einer hybriden automatischen Wiederholungsanfrage.

13. Verfahren, umfassend:
Senden von Downlink-Daten bezüglich eines oder mehrerer hybrider automatischer Downlink-Wiederholungsanfrageprozesse an ein Endgerät (520),
Empfangen von Quittierungsinformationen einer hybriden automatischen Wiederholungsanfrage von dem Endgerät (520), die eine erste Menge von Quittierungsinformationen einer hybriden automatischen Wiederholungsanfrage und eine zweite Menge von Quittierungsinformationen einer hybriden automatischen Wiederholungsanfrage umfassen, wobei die erste Menge von Quittierungsinformationen einer hybriden automatischen Wiederholungsanfrage Quittierungs- und/oder negative Quittierungsinformationen umfasst, und wobei die zweite Menge von Quittierungsinformationen einer hybriden automatischen Wiederholungsanfrage zusätzliche Informationen bezüglich mindestens einer Teilmenge von negativ quittierten hybriden automatischen Wiederholungsanfrageprozessen, die in dem ersten Menge von Quittierungsinformationen einer hybriden automatischen Wiederholungsanfrage identifiziert werden, bereitstellt, ohne zusätzliche Informationen bezüglich positiv quittierter hybrider automatischer Wiederholungsanfrageprozesse bereitzustellen, und
Konfigurieren des Endgeräts (520), wobei das Konfigurieren eine maximale Anzahl von hybriden automatischen Wiederholungsanfrageprozessen für die zweite Menge von Quittierungsinformationen einer hybriden automatischen Wiederholungsanfrage umfasst.

14. Verfahren, umfassend:
Empfangen von Downlink-Daten bezüglich des einen oder mehreren hybriden automatischen Downlink-Wiederholungsanfrageprozessen an einem Endgerät (520),
Senden von Quittierungsinformationen einer hybriden automatischen Wiederholungsanfrage von dem Endgerät (520), die eine erste Menge von Quittierungsinformationen einer hybriden automatischen Wiederholungsanfrage und eine zweite Menge von Quittierungsinformationen einer hybriden automatischen Wiederholungsanfrage umfassen, wobei die erste Menge von Quittierungsinformationen einer hybriden automatischen Wiederholungsanfrage Quittierungs- und/oder negative Quittierungsinformationen umfasst, und wobei die zweite Menge von Quittierungsinformationen einer hybriden automatischen Wiederholungsanfrage zusätzliche Informationen bezüglich mindestens einer Teilmenge von negativ quittierten hybriden automatischen Wiederholungsanfrageprozessen, die in der ersten Menge von Quittierungsinformationen einer hybriden automatischen Wiederholungsanfrage identifiziert werden, bereitstellt, ohne zusätzliche Informationen bezüglich positiv quittierter hybrider automatischer Wiederholungsanfrageprozesse bereitzustellen, und
Bestimmen einer maximalen Anzahl von hybriden automatischen Wiederholungsanfrageprozessen für die zweite Menge von Quittierungsinformationen einer hybriden automatischen Wiederholungsanfrage.

## Revendications

1. Appareil comprenant :
des moyens pour transmettre des données de liaison descendante relatives à un ou plusieurs processus de demande de répétition automatique hybride de liaison descendante à un équipement utilisateur (520),
des moyens pour recevoir des informations d'accusé de réception de demande de répétition automatique hybride en provenance de l'équipement utilisateur (520) contenant un premier ensemble d'informations d'accusé de réception de demande de répétition automatique hybride et un second ensemble d'informations d'accusé de réception de demande de répétition automatique hybride, dans lequel le premier ensemble d'informations d'accusé de réception de demande de répétition automatique hybride comporte des informations d'accusé de réception et/ou d'accusé de réception négatif, et dans lequel le second ensemble d'informations d'accusé de réception de demande de répétition automatique hybride fournit des informations supplémentaires concernant au moins un sous-ensemble de processus de demande de répétition automatique hybride avec accusé de réception négatif identifiés dans le premier ensemble d'informations d'accusé de réception de demande de répétition automatique hybride sans fournir d'informations supplémentaires concernant les processus de demande de répétition automatique hybride avec accusé de réception positif, et
des moyens pour configurer l'équipement utilisateur (520), dans lequel la configuration comporte un nombre maximal de processus de demande de répétition automatique hybride pour le second ensemble d'informations d'accusé de réception de demande de répétition automatique hybride.

2. Appareil selon la revendication 1, comprenant en outre des moyens pour configurer l'équipement utilisateur (520), dans lequel la configuration comporte un accusé de réception de demande de répétition automatique hybride étendu.

3. Appareil selon l'une des revendications 1 et 2, comprenant en outre des moyens pour configurer l'équipement utilisateur (520), dans lequel la configuration comporte une règle de sélection d'un sous-ensemble de processus de demande de répétition automatique hybride infructueux à inclure dans un rapport dans le nombre maximal de processus de demande de répétition automatique hybride pour recevoir un rapport étendu.

4. Appareil selon la revendication 3, dans lequel la règle de sélection du sous-ensemble comprend un ordre dans lequel les processus ont fait l'objet d'un accusé de réception négatif et/ou par cycle sur les supports de composants.

5. Appareil selon la revendication 3 ou 4, comprenant en outre des moyens pour identifier le sous-ensemble sur la base du premier ensemble d'informations d'accusé de réception de demande de répétition automatique hybride et de la règle de sélection du sous-ensemble.

6. Appareil selon l'une des revendications 1 à 5, comprenant en outre des moyens pour adapter une liaison pour une retransmission de demande de répétition automatique hybride sur la base du premier ensemble d'informations d'accusé de réception de demande de répétition automatique hybride et d'un second ensemble d'informations d'accusé de réception de demande de répétition automatique hybride.

7. Appareil comprenant :
des moyens pour recevoir des données de liaison descendante relatives à un ou plusieurs processus de demande de répétition automatique hybride de liaison descendante sur un équipement utilisateur (520),
des moyens pour transmettre des informations d'accusé de réception de demande de répétition automatique hybride en provenance de l'équipement utilisateur (520) contenant un premier ensemble d'informations d'accusé de réception de demande de répétition automatique hybride et un second ensemble d'informations d'accusé de réception de demande de répétition automatique hybride, dans lequel le premier ensemble d'informations d'accusé de réception de demande de répétition automatique hybride comporte des informations d'accusé de réception et/ou d'accusé de réception négatif, et dans lequel le second ensemble d'informations d'accusé de réception de demande de répétition automatique hybride fournit des informations supplémentaires concernant au moins un sous-ensemble de processus de demande de répétition automatique hybride avec accusé de réception négatif identifiés dans le premier ensemble d'informations d'accusé de réception de demande de répétition automatique hybride sans fournir d'informations supplémentaires concernant les processus de demande de répétition automatique hybride avec accusé de réception positif, et
des moyens pour déterminer un nombre maximal de processus de demande de répétition automatique hybride pour le second ensemble d'informations d'accusé de réception de demande de répétition automatique hybride.

8. Appareil selon la revendication 7, comprenant en outre des moyens pour recevoir une configuration de l'équipement utilisateur (520), dans lequel la configuration comporte une règle de sélection d'un sous-ensemble de processus de demande de répétition automatique hybride infructueux à inclure dans un rapport dans le nombre maximal de processus de demande de répétition automatique hybride pour recevoir un rapport étendu.

9. Appareil selon l'une des revendications 7 ou 8, comprenant en outre des moyens pour recevoir une configuration de l'équipement utilisateur (520), dans lequel la configuration est reçue à l'aide d'une signalisation de couche supérieure ou d'une combinaison d'une signalisation de couche supérieure et d'une signalisation de couche physique.

10. Appareil selon l'une des revendications 7 à 9, comprenant en outre des moyens pour recevoir une configuration de l'équipement utilisateur comportant une règle de sélection du sous-ensemble, dans lequel la règle comprend un ordre dans lequel les processus ont fait l'objet d'un accusé de réception négatif et/ou par cycle sur les supports de composants.

11. Appareil selon la revendication 10, comprenant en outre des moyens pour identifier le sous-ensemble à signaler sur la base du premier ensemble d'informations d'accusé de réception de demande de répétition automatique hybride et de la règle de sélection du sous-ensemble.

12. Appareil selon l'une des revendications 7 à 11, comprenant en outre des moyens pour coder conjointement ou séparément le premier ensemble d'informations d'accusé de réception de demande de répétition automatique hybride et le second ensemble d'informations d'accusé de réception de demande de répétition automatique hybride.

13. Procédé comprenant :
la transmission de données de liaison descendante relatives à un ou plusieurs processus de demande de répétition automatique hybride de liaison descendante à un équipement utilisateur (520),
la réception d'informations d'accusé de réception de demande de répétition automatique hybride en provenance de l'équipement utilisateur (520) contenant un premier ensemble d'informations d'accusé de réception de demande de répétition automatique hybride et un second ensemble d'informations d'accusé de réception de demande de répétition automatique hybride, dans lequel le premier ensemble d'informations d'accusé de réception de demande de répétition automatique hybride comporte des informations d'accusé de réception et/ou d'accusé de réception négatif, et dans lequel le second ensemble d'informations d'accusé de réception de demande de répétition automatique hybride fournit des informations supplémentaires concernant au moins un sous-ensemble de processus de demande de répétition automatique hybride avec accusé de réception négatif identifiés dans le premier ensemble d'informations d'accusé de réception de demande de répétition automatique hybride sans fournir d'informations supplémentaires concernant les processus de demande de répétition automatique hybride avec accusé de réception positif, et
la configuration de l'équipement utilisateur (520), dans lequel la configuration comporte un nombre maximal de processus de demande de répétition automatique hybride pour le second ensemble d'informations d'accusé de réception de demande de répétition automatique hybride.

14. Procédé comprenant :
la réception de données de liaison descendante relatives à un ou plusieurs processus de demande de répétition automatique hybride de liaison descendante à un équipement utilisateur (520),
la transmission d'informations d'accusé de réception de demande de répétition automatique hybride en provenance de l'équipement utilisateur (520) contenant un premier ensemble d'informations d'accusé de réception de demande de répétition automatique hybride et un second ensemble d'informations d'accusé de réception de demande de répétition automatique hybride, dans lequel le premier ensemble d'informations d'accusé de réception de demande de répétition automatique hybride comporte des informations d'accusé de réception et/ou d'accusé de réception négatif, et dans lequel le second ensemble d'informations d'accusé de réception de demande de répétition automatique hybride fournit des informations supplémentaires concernant au moins un sous-ensemble de processus de demande de répétition automatique hybride avec accusé de réception négatif identifiés dans le premier ensemble d'informations d'accusé de réception de demande de répétition automatique hybride sans fournir d'informations supplémentaires concernant les processus de demande de répétition automatique hybride avec accusé de réception positif, et
la détermination d'un nombre maximal de processus de demande de répétition automatique hybride pour le second ensemble d'informations d'accusé de réception de demande de répétition automatique hybride.
